# EUROPÄISCHE PATENTSCHRIFT

(11) **EP 0 405 349 B1**
(45) Veröffentlichungstag und Bekanntmachung des Hinweises auf die Patenterteilung: **13.12.1995**
(21) Anmeldenummer: 90111842.2
(22) Anmeldetag: 22.06.1990
(51) Int. Cl.: H04K 3/00

(54) **Sende- und/oder Empfangsgerät**
Transmitter and/or receiver apparatus
Appareil d'émission et/ou de réception

(30) Priorität: 28.06.1989 DE 3921102
(43) Veröffentlichungstag der Anmeldung: 02.01.1991
(73) Patentinhaber: Alcatel SEL Aktiengesellschaft, D-70435 Stuttgart (DE)
(72) Erfinder: Baumann, Jürgen, D-7535 Königsbach-Stein (DE)
(74) Vertreter: Pohl, Herbert, Dipl.-Ing.

(56) Entgegenhaltungen:
- US-A- 4 216 445
- IEE PROCEEDINGS SECTION A-K, Band 129, Nr. 3, Juni 1982, Teil F: "Communications, Radar & Signal", Seiten 213-222, Old Woking, Surrey, GB; P.J. MUNDAY et al.: "Jaguar-V frequency-hopping radio system"

## Beschreibung

Die Erfindung bezieht sich auf ein nach dem Frequenzsprung-Verfahren arbeitendes Sende- und/oder Empfangsgerät nach dem Oberbegriff des Anspruchs 1.

Ein solches Gerät ist bekannt aus
IEE PROCEEDINGS SECTION A-K, Band 129, Nr. 3, Juni 1982, Teil F: "Communications, Radar & Signal", Seiten 213-222, Old Woking, Surrey, GB; P.J. Munday et al.: "Jaguar-V frequency-hopping radio system".

Derartige Sende- und/oder Empfangsgeräte wechseln während einer Nachrichtenübertragung sehr schnell die Frequenz, um möglichst viel Zeit für die Nachrichtenübertragung zur Verfügung zu haben. Deshalb weisen sie statt herkömmlicher Drehkondensatoren und Relais durch PIN-Dioden geschaltete Kapazitätsaggregate und PIN-Dioden-Schalter als Abstimm- und Schaltmittel auf. Außerdem sollen die Schaltzeiten auch deshalb klein sein, um insbesondere bei großen zu schaltenden Leistungen die dabei auftretenden Verlustleistungen klein zu halten. Je schneller aber geschaltet wird, desto größer sind die dabei entstehenden Störsignale, die den Betrieb der Geräte stören können.

Bei dem eingangs genannten System erfolgt deshalb eine weiche Tastung des Ausgangssignals eines (Leistungs-)Oszillators mit Hilfe eines steuerbaren Dämpfungsglieds, wann immer die Frequenz gewechselt wird. Die nachfolgenden Verstärkerstufen müssen dabei im wesentlichen linear sein.

Der Erfindung liegt die Aufgabe zugrunde, ein Sende- und/oder Empfangsgerät anzugeben, das beim Frequenzwechsel (und auch bei jeder Sende/Empfangsumschaltung) keine der obengenannten Störsignale aussendet.

Die Lösung dieser Aufgabe erfolgt gemäß Anspruch 1 durch eine Schaltungsanordnung, durch die bei jedem Frequenzwechsel und/oder jeder Sende/Empfangsumschaltung das Sende- und/oder Empfangsgerät weich (Kontinuierlich) an eine Antenne ab- und wieder ankoppel bar ist. Vorteilhafte Weiterbildungen sind in den Unteransprüchen enthalten.

Das neue Sende- und/oder Empfangsgerät, im folgenden nur Funkgerät genannt, hat den Vorteil, daß beispielsweise die mit PIN-Dioden realisierten Abstimmschaltungen hinsichtlich Wirkungsgrad und Schaltzeiten optimal dimensioniert werden können. Die beim Schalten entstehenden Störsignale werden durch die Schaltungsanordnung unterdrückt, da die Antenne während der Zeit vom Funkgerät hochfrequenzmäßig getrennt ist, während der der Frequenzwechsel im Funkgerät durchgeführt wird.

Die Erfindung wird nachstehend anhand eines Ausführungsbeispiels erläutert. Es zeigen:
- Fig. 1: ein Blockschaltbild eines Funkgeräts mit einer Antenne;
- Fig. 2: ein Schaltbild eines Dämpfungsglieds und Hochpaßfilters.

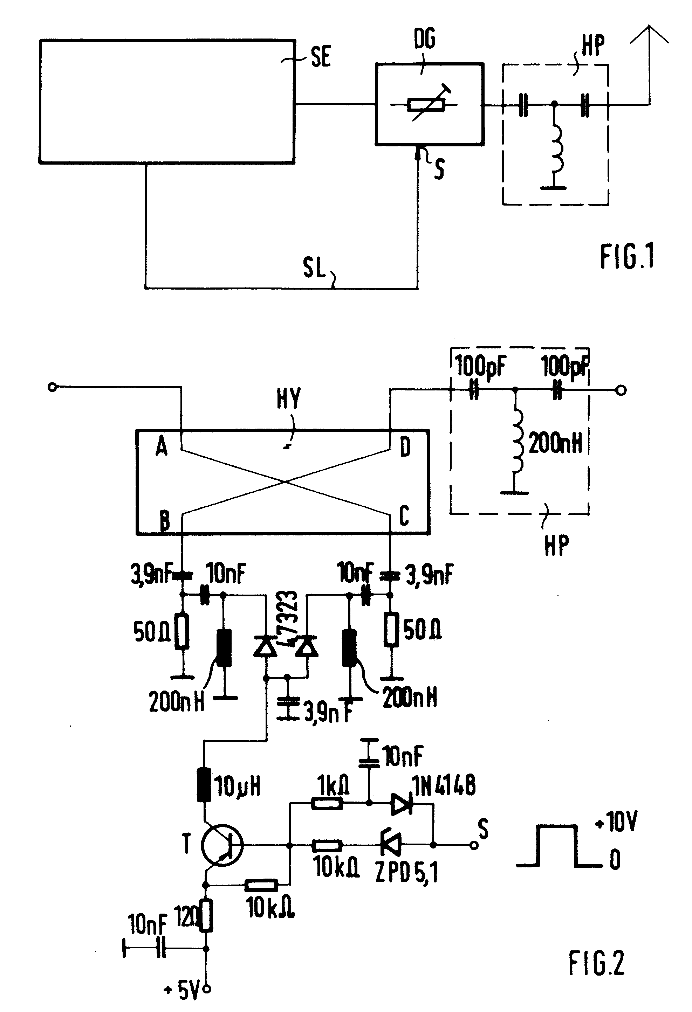

Das Funkgerät gemäß Fig. 1 weist einen Sende-/Empfangsteil SE, ein steuerbares Dämpfungsglied DG und ein Hochpaßfilter HP auf, an das eine Antenne angeschlossen ist. Das Dämpfungsglied DG ist zwischen das Hochpaßfilter HP und das Sende-/Empfangsteil SE geschaltet. Es besitzt einen Steuereingang S (Fig. 2), an den eine vom Sende-/Empfangsteil SE kommende Steuerleitung SL angeschlossen ist.

Das Sende-/Empfangsteil SE arbeitet nach dem Frequenzsprungverfahren und weist alle üblicherweise in einem Funkgerät vorhandenen Schaltkreise, insbesondere auch durch beispielsweise PIN-Dioden geschaltete Abstimmschaltungen, auf. Es weist ferner einen Schaltkreis auf, der bei jedem Frequenzwechsel und/oder jeder Sende/Empfangsumschaltung mindestens einen Steuerimpuls erzeugt. Dieser wird über die Steuerleitung SL dem Dämpfungsglied DG zugeführt.

Geeignete Dämpfungsglieder sind bekannt, z.B. aus "PIN-Diode Designers", Handbuch & Katolog PD/500 B, 1981, Unitrode Corporation, insbesondere Seiten 103-104 (Fig. 6-24 und 6-27) oder aus US-Patent 4,216,445.

Beim Ausführungsbeispiel gemäß Fig. 2 ist das Funkgerät SE an den ersten Anschluß A einer -90°/3dB-Hybridschaltung HY und ein Hochpaßfilter HP an den vierten Anschluß D angeschlossen. Der zweite B und dritte C Anschluß ist über je einen Kondensator 3,9nF und Widerstand 50Ω mit Masse verbunden. Den Widerständen 50Ω ist je eine Hintereinanderschaltung aus einem Kondensator 10nF und einer Spule 200nH parallelgeschaltet.

Jeder Spule 200nH ist eine Hintereinanderschaltung aus je einer PIN-Diode 47323 und einem gemeinsamen Kondensator 3,9nF parallelgeschaltet, wobei die Anoden der PIN-Dioden mit dem gemeinsamen Kondensator und mit einer Spule 10uA verbunden sind. Die Spule 10uH ist ferner mit dem Kollektor eines pnp-Transistors T verbunden, dessen Emitter über einen Widerstand 12Ω mit einem Pol +5V einer Spannungsquelle und über einen Widerstand mit seiner Basis verbunden ist. Zwischen der Basis des Transistors und einem Steuereingang S befindet sich eine Parallelschaltung zweier Hintereinanderschaltungen, von denen die eine aus einem Widerstand 1kΩ und einer Diode 1N4148 und die andere aus einem Widerstand 10kΩ und einer Zenerdiode ZPD5,1 besteht. Dabei ist die Anode der Zenerdiode und die Kathode der Diode mit dem Steuereingang S verbunden. Ferner enthält das Dämpfungsglied zwei weitere Kondensatoren 10nF, von denen der eine die Anode der Diode 1N4148 und der andere den Pol +5V der Spannungsquelle mit Masse verbindet.

Durch Anlegen eines rechteckförmigen Spannungsimpulses von +10V wird das Funkgerät von der Antenne weich getrennt und wieder weich angeschaltet, d.h. die Dämpfung des Dämpfungsglieds steigt von einem kleinen Wert auf einen großen und fällt anschließend wieder auf den kleinen Wert ab. Der weiche Anstieg und Abfall ist durch eine geeignete Dimensionierung der Bauelemente des Dämpfungsglieds erreicht, durch die der rechteckförmige Spannungsimpuls durch den Transistor T, der mit einem konstanten Strom den Kondensator 3,9nF auflädt, in einen trapezförmigen Stromimpuls umgewandelt wird. HF-mänig ergibt sich daraus ein Dämpfungsverlauf, der der cos-oder cos²-Funktion ähnelt. Bei diesem Verlauf entstehen beim Frequenzwechsel oder der Sende/Empfangsumschaltung die geringsten Störsignale. Sie liegen im Frequenzbereich unter 30 MHz und sind durch den Hochpaß HP von der Antenne ferngehalten. Die angegebene Dimensionierung der Bauelemente ist für den VHF-Bereich (30-80 MHz) geeignet.

Die Länge des Spannungsimpulses ist so gewählt, daß in der Zwischenzeit die Einstellung einer anderen Frequenz oder die Umschaltung zwischen Sende- und Empfangsbetrieb im Funkgerät durchgeführt ist. Während dieser Zeit fließt durch den Transistor T und daher auch durch die PIN-Dioden kein Strom, so daß die PIN-Dioden einen großen Widerstand besitzen und der zweite und dritte Anschluß der Hybridschaltung HY mit 50 Ohm abgeschlossen sind. Dadurch teilt sich die vom Funkgerät abgegebene Leistung auf die verschiedenen Anschlüsse der Hybridschaltung HY auf, so daß an die Antenne nur noch eine verminderte Leistung gelangt.

Im umgekehrten Fall sind der zweite und dritte Anschluß über die PIN-Dioden HF-mäßig an Masse gelegt. Daher wird die an diese Anschlüsse gelangende Leistung reflektiert und gelangt deshalb fast vollständig zur Antenne.

## Patentansprüche

1. Nach dem Frequenzsprung-Verfahren arbeitendes Sende- und/oder Empfangsgerät mit einer Antenne, mit mindestens einer Verstärkerstufe und mit einer Schaltungsanordnung mit kontinuierlich veränderbarem Verhältnis von Eingangsamplitude zu Ausgangsamplitude, **dadurch gekennzeichnet**, daß die Antenne an die Schaltungsanordnung angeschlossen ist und daß keine der mindestens einen Verstärkerstufe zwischen der Schaltungsanordung und der Antenne liegt.

2. Sende- und/oder Empfangsgerät nach Anspruch 1, dadurch gekennzeichnet, daß die Schaltungsanordnung ein steuerbares Dämpfungsglied (DG) enthält, das mindestens einen Steuereingang (S) aufweist, und daß die Dämpfung des Dämpfungsglieds (DG) durch eine Steuerspannung oder einen Steuerstrom am Steuereingang (S) veränderbar ist.

3. Sende- und/oder Empfangsgerät nach Anspruch 2, dadurch gekennzeichnet, daß durch mindestens einen Steuerimpuls die Dämpfung von einem kleinen Wert auf einen großen Wert ansteigt und anschließend wieder auf den kleinen Wert abfällt, oder umgekehrt, wobei der Anstieg und der Abfall einen Kontinuierlichen Verlauf hat.

4. Sende- und/oder Empfangsgerät nach Anspruch 2 oder 3, dadurch gekennzeichnet, daß das Dämpfungsglied (DG) mindestens eine PIN-Diode enthält, daß durch die Steuerspannung, den Steuerstrom oder den Steuerimpuls die Leitfähigkeit der PIN-Diode(n) und dadurch auch die Dämpfung des Dämpfungsglieds (DG) verändert ist.

5. Sende- und/oder Empfangsgerät nach Anspruch 4, dadurch gekennzeichnet,
daß das Dämpfungsglied (DG) eine 90°/3dB-Hybridschaltung (HY) mit vier Anschlüssen enthält, von denen der erste (A) mit einer Antennenbuchse des Sende- und/oder Empfangsgeräts (SE) verbindbar ist, der vierte (D) mit der Antenne verbindbar ist, und der zweite (B) und dritte (C) mit einer Schaltung verbunden ist, die den Steuereingang (S) und die PIN-Diode(n) aufweist.

6. Sende- und/oder Empfangsgerät nach einem der vorhergehenden Ansprüche,
dadurch gekennzeichnet, daβ die Schaltungsanordnung ein Hochpaßfilter (HP) enthält, das zwischen das Dämpfungsglied (DG) und die Antenne geschaltet ist.

## Claims

1. A frequency-hopping transmitter and/or receiver unit comprising an antenna, one or more amplifier stages, and a circuit arrangement with a continously variable ratio of input amplitude to output amplitude, **characterized in** that the antenna is connected to the circuit arrangement, and that none of the one or more amplifier stages is located between the circuit arrangement and the antenna.

2. A transmitter and/or receiver unit as claimed in claim 1, characterized in that the circuit arrangement includes a variable attenuator (DG) having at least one control input (S), and that the attenuation provided by the attenuator (DG) can be varied by a control voltage or a control current at the control input (S).

3. A transmitter and/or receiver unit as claimed in claim 2, characterized in that in response to at least one control pulse, the attenuation rises from a small value to a large value and subsequently falls back to the small value, or vice versa, with the rise and fall being continuous.

4. A transmitter and/or receiver unit as claimed in claim 2 or 3, characterized in that the attenuator (DG) includes at least one PIN diode, and that the conductivity of the PIN diode(s), and thus the attenuation provided by the attenuator (DG), is varied by the control voltage, the control current, or the control pulse.

5. A transmitter and/or receiver unit as claimed in claim 4, characterized in that the attenuator (DG) includes a 90°/3dB hybrid circuit (HY) having four terminals, the first (A) of which is connectable to an antenna socket of the transmitter and/or receiver unit (SE), the fourth (D) of which is connectable to the antenna, and the second (B) and third (C) of which are connected to a circuit comprising the control input (S) and the PIN diode(s).

6. A transmitter and/or receiver unit as claimed in any of the preceding claims, characterized in that the circuit arrangement includes a high-pass filter (HP) between the attenuator (DG) and the antenna.

## Revendications

1. Appareil d'émission et/ou de réception fonctionnant selon le procédé du saut de fréquence, comportant une antenne, au moins un étage d'amplification, et des circuits présentant un rapport variable en continu entre amplitude d'entrée et amplitude de sortie, caractérisé en ce que l'antenne est connectée aux circuits et en ce qu aucun des au moins un étage d'amplification ne se trouve entre les circuits et l'antenne.

2. Appareil d'émission et/ou de réception selon la revendication 1, caractérisé en ce que les circuits comportent un atténuateur contrôlable (DG), qui présente au moins une entrée de commande (S), et en ce que l'affaiblissement par l'atténuateur (DG) est modifiable par une tension de commande ou un courant de commande au niveau de l'entrée de commande (S).

3. Appareil d'émission et/ou de réception selon la revendication 2, caractérisé en ce que l'affaiblissement monte d'une faible valeur à une valeur élevée sous l'effet d'au moins une impulsion, et retombe ensuite à la faible valeur, ou inversement, la montée et la chute présentant une variation continue.

4. Appareil d'émission et/ou de réception selon la revendication 2 ou la revendication 3, caractérisé en ce que l'atténuateur (DG) comporte au moins une diode PIN, et en ce que la conductibilité de la (des) diode(s) PIN, et par là même l'affaiblissement par l'atténuateur (DG), est modifiée par la tension de commande, le courant de commande ou l'impulsion de commande.

5. Appareil d'émission et/ou de réception selon la revendication 4, caractérisé en ce que l'atténuateur (DG) comporte un circuit hybride 90°/3db (HY) à quatre connexions, dont la première (A) peut être reliée à une douille d'antenne de l'appareil d'émission/réception (SE), la quatrième (D) peut être reliée à l'antenne, et la deuxième (B) et la troisième (C) sont reliées à un circuit, qui présente l'entrée de commande (S) et la (les) diode(s) PIN.

6. Appareil d'émission et/ou de réception selon l'une des revendications précédentes, caractérisé en ce que les circuits comportent un filtre passe-haut (HP), raccordé entre l'atténuateur (DG) et l'antenne.
